# EUROPEAN PATENT APPLICATION

(11) **EP 4 432 697 A1**
(43) Date of publication of application: **18.09.2024**
(21) Application number: 21966658.3
(22) Date of filing: 07.12.2021
(51) Int. Cl.: H04R 1/10, C08G 18/42

(54) **DEFORMATION STRUCTURE, AND WEARABLE DEVICE AND METHOD FOR USING SAME**

(71) Applicant: Huawei Technologies Co., Ltd., Shenzhen, Guangdong 518129 (CN)
(72) Inventor: SHI, Diwen, Shenzhen, Guangdong 518129 (CN); NI, Chujun, Hangzhou, Zhejiang 310027 (CN); ZHAO, Qian, Hangzhou, Zhejiang 310027 (CN); HUANG, Tao, Shenzhen, Guangdong 518129 (CN)
(74) Representative: Pfenning, Meinig & Partner mbB
(86) International application number: PCT/CN2021/136101
(87) International publication number: WO 2023/102734

(57) **Abstract**

A deformable structure (1), a wearable device, and a wearable device usage method are disclosed. The deformable structure (1) may be used in the wearable device. The deformable structure (1) includes a shape memory polymer. The shape memory polymer includes a functional group, the functional group is used to enable the shape memory polymer to change from a first state to a second state under a stimulation condition, at a first temperature, a Young's modulus of the shape memory polymer in the second state is greater than a Young's modulus of the shape memory polymer in the first state, and the first temperature is higher than a glass transition temperature of the shape memory polymer in the first state. When the deformable structure (1) in the first state is used in the wearable device, the deformable structure may be deformed into a shape that adapts to a physiological feature of a user, and may change into the second state based on a requirement, to facilitate long-term wearing of the user.

## Description

### TECHNICAL FIELD

This application relates to the field of wearable device technologies, and in particular, to a deformable structure, a wearable device, and a wearable device usage method.

### BACKGROUND

A wearable device has become an indispensable part of modern human life, and the wearable device is usually used in a form matching a physiological feature of a user. Therefore, comfort of the wearable device needs to be considered. Each user has a unique physiological feature. However, a structure and a shape of the existing wearable device are usually uniformly set before factory delivery, and are difficult to match different users. When the wearable device does not match the physiological feature of the user or a matching degree is low, the wearable device is at a risk of falling off, and the user may also feel local pressing pain.

It can be learned that wearable devices with unified specifications cannot meet comfort requirements of different users for the wearable devices.

### SUMMARY

This application provides a deformable structure, a wearable device, and a wearable device usage method. The deformable structure may be used in the wearable device. Therefore, the deformable structure may be deformed, based on a physiological feature of a user, into a second shape that adapts to the physiological feature of the user, to meet a wearing comfort requirement of the user, and may be cured for a second time to maintain the second shape, to meet a long-term usage requirement of the user.

According to a first aspect, this application provides a deformable structure. The deformable structure may be manufactured, based on an application scenario, into a shape that adapts to a structure in which the deformable structure is used. The deformable structure includes a shape memory polymer. In a first state, the deformable structure has a glass transition temperature. When a temperature of the deformable structure is lower than the glass transition temperature, the deformable structure is in a fixed first shape. When the temperature of the deformable structure increases to be not lower than the glass transition temperature, a shape of the deformable structure is variable, and a second shape can be formed under an external force. When the temperature of the deformable structure decreases to be lower than the glass transition temperature, the deformable structure can be fixed into the second shape and maintain the fixed second shape. The deformable structure can be deformed based on different application scenarios, to provide customized services for different customers.

However, a temperature change in an external environment is uncontrollable. In the first state, when the temperature of the deformable structure is close to or higher than the glass transition temperature, the shape of the deformable structure may be changed. Consequently, a user needs to perform shape correction on a deformable material for a plurality of times, which is inconvenient and affects user experience.

Therefore, the shape memory polymer further includes a functional group. The functional group introduces a second-time curing mechanism for the shape memory polymer, so that the shape memory polymer may change from a first state to a second state under a stimulation condition. At a first temperature, a Young's modulus of the shape memory polymer in the second state is greater than a Young's modulus of the shape memory polymer in the first state, so that the shape memory polymer in the second state has a more stable shape than the shape memory polymer in the first state. The first temperature is higher than a glass transition temperature of the shape memory polymer in the first state. After the deformable structure is deformed into the proper second shape based on a specific user requirement, the functional group is stimulated to enable the shape memory polymer to change from the first state to the second state. This is equivalent to performing curing on the second shape for a second time, so that a shape of the deformed material in the second state is more stable than the shape of the deformable material in the first state, and this is convenient for a specific user to use for a long time.

In addition, because the second-time curing mechanism brought by the functional group can greatly avoid impact of the external environment on a shape change of the deformable structure, a low glass transition temperature may be set for the shape memory polymer. Therefore, when the deformable structure is in contact with the user, the user does not feel uncomfortable due to an excessively high temperature of the deformable structure. This improves user experience.

The deformable structure includes the shape memory polymer, and may be used in a part that is of the wearable device and that is used to be in contact with the user. When the user wears the wearable device, the shape memory polymer in the first state enables the deformable structure to be deformed based on a personal physiological feature of the user, to adapt to the personal physiological feature of the user (the second shape). This meets a comfort requirement of the user. When the user needs the deformable structure to be fixed into the second shape, the functional group may be stimulated to enable the shape memory polymer to change from the first state to the second state.

The shape memory polymer is of a porous structure, and the porous structure is conducive to expansion and compression of the deformable structure. Specifically, the porous structure of the shape memory polymer may be prepared by using a solvent ice-templating method, a direct template method, or a foaming method. The prepared porous structure is in a fine foam shape, a pore size of the porous structure may be as small as several microns, and a specific pore size range is 5 µm to 200 µm. A smaller pore size can make the shape memory polymer more beautiful. For example, the pore size of the porous structure may be 40 µm to 70 µm. A porosity can reach 30% to 90%, and a higher porosity indicates a higher expansion ratio of the shape memory polymer when the shape memory polymer restores to an initial state.

A feature of the shape memory polymer is that the shape memory polymer has the first shape (which is also referred to as an initial shape or a permanent shape) formed through curing for one time, and after the first shape of the shape memory polymer is changed under a specific condition and fixed (the second shape), the first shape of the shape memory polymer can be restored under stimulation of an external condition. The second shape is equivalent to a temporary shape, and the first shape is different from the second shape. The shape memory polymer may be a thermal excitation material, and a thermal excitation temperature (namely, a deformation temperature) of the shape memory polymer is the glass transition temperature. When the temperature of the shape memory polymer is higher than the glass transition temperature, the shape memory polymer is in a soft and high elastic state, automatically restores to the first shape without an external force, and may be correspondingly deformed into the second shape under an external force. In addition, when the temperature of the shape memory polymer decreases to be lower than the glass transition temperature, the shape memory polymer is in a hard and brittle glass state, and the second shape is memorized, which is equivalent to the second shape being maintained. Conversion from the first shape to the second shape of the shape memory polymer is reversible. After the temperature of the shape memory polymer increases again to be higher than the glass transition temperature, the second shape may be restored to the first shape again. The glass transition temperature is a glass transition temperature of the shape memory polymer in the first state.

In some embodiments, the shape memory polymer changes from the first state to the second state through a cross-linking reaction of the functional group. When the shape memory polymer is in the first state, a cross-linking density of the shape memory polymer is less than a cross-linking density of the shape memory polymer in the second state.

In a possible implementation, a cross-linking reaction mechanism of the functional group includes but is not limited to free radical polymerization, cationic polymerization, anionic polymerization, coordination polymerization, and various functional group reactions, and the stimulation condition may be light, water vapor, or the like. When the stimulation condition is light, the functional group may specifically be a light-curing functional group, namely, a functional group that can perform a cross-linking reaction under light stimulation.

The shape memory polymer may specifically be a one-way shape memory polymer (the first shape of the shape memory polymer expands, and may be defined as an expanded state, and the second shape of the shape memory polymer in a compressed state needs to be completed manually or compressed by using a mold) or a two-way shape memory polymer (the expanded state and the compressed state of the shape memory polymer may be automatically completed under external stimulation). As the deformable structure is used in the wearable device, the glass transition temperature of the shape memory polymer may be set to 36°C to 50°C, which is close to or slightly higher than a human body temperature, and is user-friendly. In addition, in some cases, the user may use a body temperature of the user to heat the deformable structure to deform the deformable structure.

The shape memory polymer, as a wearable material, needs to be human body-friendly with small toxicity, and may include any one or more of polyacrylate, polyurethane, epoxy resin, and polyester. To optimize performance of the shape memory polymer, the shape memory polymer includes a first component and a second component. When the shape memory polymer is in the first state, a glass transition temperature of the first component is higher than a glass transition temperature of the second component. The glass transition temperature of the first component determines a thermal excitation temperature (namely, a deformation temperature) of the material, and the glass transition temperature of the second component is set to be lower than a general ambient temperature, to regulate toughness of the material at a room temperature. In a process of preparing the shape memory polymer, the first component and the second component are copolymerized, and a specific pore forming process is used, to obtain a shape memory material with a porous structure. A range of a mass ratio of the first component to the second component may be selected as 5:1 to 1:2 based on experimental data. Hardness, toughness, and the like of the material at the room temperature can be adjusted by adjusting the ratio of the first component to the second component, so that mechanical performance of the deformable structure at the room temperature is stable (the deformable structure is not broken due to a hard and brittle material), and a tactile feeling meets a wearing comfort requirement.

According to a second aspect, this application further provides a wearable device. The wearable device may specifically be a device, for example, a headset or glasses, that needs to match a personal physiological feature of a user. The wearable device specifically includes a device body and the deformable structure. The deformable structure is attached to a surface of the device body, and is specifically located at a position of the device body in contact with the user. Because the deformable structure may be deformed based on the physiological feature of the user, the wearable device can be customized, to improve wearing comfort of the user.

The deformable structure may be disposed on the surface of the device body in a full coverage or partial coverage manner. When the deformable structure is disposed on the surface of the device body in the partial coverage manner, a position at which the deformable structure is disposed may specifically be a target force-bearing point of the device body, namely, a position at which the user easily feels pressing pain due to stress concentration when the wearable device is worn.

To facilitate deformation of the deformable structure, the wearable device further includes a heating device and a controller. The heating device is configured to heat the deformable structure. The heating device may be disposed in the deformable structure or on a surface of the deformable structure in a manner of being in contact with the deformable structure, or may be disposed at another position isolated from space of the deformable structure. When the deformable structure needs to be heated, the deformable structure is placed at a position of the heating device to heat the deformable structure. The controller is in signal connection with the heating device, to control enabling and disabling of the heating device. The heating device may be enabled by using a user instruction, and the heating device is disabled by using feedback of a detection signal of a temperature, pressure, and time.

Generally, the heating device heats the deformable structure within 2 min. When longest heating time is reached, the controller may control the heating device to stop heating. For precise time control, a timer may be set in the controller. It should be understood that, to improve use experience, shorter heating duration herein is better.

The heating duration of the deformable structure may further be controlled in another manner. For details, refer to the following example.

When a temperature of the deformable structure is higher than a temperature threshold, heating needs to be stopped in time. To monitor the temperature of the deformable structure, a temperature sensor in contact with the deformable structure may be disposed. The temperature sensor is in signal connection with the controller, to feed back a temperature monitoring signal to the controller. The temperature sensor needs to be isolated from the heating device, to prevent the heating device from interfering with temperature monitoring accuracy of the temperature sensor.

When pressure applied to the deformable structure is greater than a pressure threshold, heating also needs to be stopped in time. When the deformable structure is in contact with the user, the deformable structure generates specific pressure on the user. The pressure applied to the deformable structure herein is equivalent to a reaction force against the pressure applied by the deformable structure to the user. To monitor pressure applied to the deformable structure, a pressure sensor may be disposed on a side facing the device body or a side away from the device body of the deformable structure, and the pressure sensor is in signal connection with the controller, to feed back a pressure monitoring signal to the controller.

It should be noted that, when the timer, the temperature sensor, and the pressure sensor are all disposed in the wearable device, the controller may control the heating device to stop heating provided that any one of the monitoring devices feeds back monitoring information to the controller. When only the timer or the temperature sensor is disposed in the wearable device, the controller may control, based on only monitoring information fed back by the timer or the temperature sensor, the heating device to stop heating. When the pressure sensor is disposed in the wearable device, the timer or the temperature sensor further needs to be disposed (to prevent a temperature of a single pressure sensor from being excessively high). When either the pressure sensor or the timer feeds back the monitoring information to the controller, or when either the pressure sensor or the temperature sensor feeds back the monitoring information to the controller, the controller may control the heating device to stop heating.

In a possible implementation, a protective layer covers a surface of the deformable structure. The protective layer needs to be elastic, and does not affect expansion and deformation of a deformable material. In addition, the protective layer may further be set to have features such as waterproof, heat insulation, antibacterial, and dirty resistance, for example, the protective layer may be silicone or fluorine rubber.

For ease of accommodation of the device body, the wearable device may further include a case, and the case includes accommodation space for accommodating the device body. A stimulation condition generation device configured to provide a stimulation condition for a functional group of a shape memory polymer may be disposed in the case. When the shape memory polymer needs to change from a first state to a second state, the device body is placed in the case, and the stimulation condition generation device is enabled. Herein, the case may also be designed to heat the deformable structure of the wearable device. Specifically, the heating device is disposed in the case. When the deformable structure of the wearable device needs to be heated, the wearable device is placed in the case, and the heating device is enabled.

According to a third aspect, this application further provides a wearable device usage method, used to use the wearable device. The method specifically includes:
applying a stimulation condition to a deformable structure of the wearable device, so that a functional group of a shape memory polymer included in the deformable structure enables the shape memory polymer to change from a first state to a second state.

At a first temperature, a Young's modulus of the shape memory polymer in the second state is greater than a Young's modulus of the shape memory polymer in the first state, and the first temperature is higher than a glass transition temperature of the shape memory polymer in the first state.

Before the shape memory polymer changes from the first state to the second state, the deformable structure of the wearable device may further be deformed based on a requirement. Specifically, the wearable device usage method may further include:
raising a temperature of the deformable structure to be not lower than the glass transition temperature of the shape memory polymer in the first state, and deforming the deformable structure into a second shape that matches target space; and
after the temperature of the deformable structure decreases to be lower than the glass transition temperature of the shape memory polymer in the first state, removing a device body from the target space.

In a possible implementation, the raising a temperature of the deformable structure to be not lower than the glass transition temperature of the shape memory polymer in the first state, to deform the deformable structure into a second shape that matches target space includes the following steps:
placing at least a part of the device body in the target space;
heating the deformable structure, so that the temperature of the deformable structure is not lower than the glass transition temperature of the shape memory polymer in the first state; and
when a state of the deformable structure reaches a set condition, stopping heating the deformable structure.

There are three cases in which the state of the deformable structure reaches the set condition. Case 1: Heating duration of the deformable structure reaches a duration threshold, where the duration threshold may be 2 minutes, and shorter duration is better. Case 2: The temperature of the deformable structure reaches a temperature threshold, where the temperature threshold meets a heat excitation temperature and is safe for a human body. Case 3: Pressure applied to the deformable structure reaches a pressure threshold, where the pressure threshold may be set to pressure that a user feels comfortable during wearing. The pressure threshold may be determined after data obtained based on wearing experience feedback of the user within a selected range is processed, and the pressure threshold may be set to a high, medium, or low level based on a requirement. When a timer, a temperature sensor, and a pressure sensor are all disposed in the wearable device, the controller may control the heating device to stop heating provided that any one of the three cases is met. When only the timer or the temperature sensor is disposed in the wearable device, the controller may control, based on only monitoring information fed back by the timer or the temperature sensor, the heating device to stop heating. When the pressure sensor is disposed in the wearable device, the timer or the temperature sensor further needs to be disposed (to prevent a temperature of a single pressure sensor from being excessively high). When either the pressure sensor or the timer feeds back the monitoring information to the controller, or when either the pressure sensor or the temperature sensor feeds back the monitoring information to the controller, the controller may control the heating device to stop heating. In another possible implementation, the raising a temperature of the deformable structure to be not lower than the glass transition temperature of the shape memory polymer in the first state, to deform the deformable structure into a second shape that matches target space includes the following steps:
heating the deformable structure, and when the temperature of the deformable structure is not lower than the glass transition temperature of the shape memory polymer in the first state, stopping heating; and
enabling the deformable structure to be in a compressed state, and placing at least a part of the device body in the target space.

### BRIEF DESCRIPTION OF DRAWINGS

FIG. 1 is a schematic diagram of a deformation process of a shape memory polymer;
FIG. 2 is a schematic diagram of a structure of a shape memory polymer of a deformable structure according to an embodiment of this application;
FIG. 3 is a schematic diagram of a state of a molecular chain of a shape memory polymer of a deformable structure according to an embodiment of this application;
FIG. 4 is a schematic diagram of a deformation process of a shape memory polymer of a deformable structure according to an embodiment of this application;
FIG. 5 is a schematic diagram of a state of a molecular chain of a shape memory polymer of a deformable structure with a functional group according to an embodiment of this application;
FIG. 6 and FIG. 7 are schematic diagrams of a structure of a wearable device according to an embodiment of this application;
FIG. 8 is a schematic diagram of a deformation process of a wearable device during wearing according to an embodiment of this application;
FIG. 9 is a schematic diagram of a position at which a heating structure of a wearable device is disposed according to an embodiment of this application;
FIG. 10 is a schematic diagram of a control principle of a wearable device according to an embodiment of this application;
FIG. 11 is a schematic diagram of positions at which a temperature sensor and a pressure sensor of a wearable device are disposed according to an embodiment of this application;
FIG. 12 is a schematic diagram of a structure of a wearable device including a case according to an embodiment of this application;
FIG. 13 is a schematic diagram of steps of a wearable device usage method according to an embodiment of this application;
FIG. 14 is a schematic diagram of step S1 in FIG. 13; and
FIG. 15 is a schematic diagram of step S1 in FIG. 13.

### DESCRIPTION OF EMBODIMENTS

A wearable device usually needs to be used on a surface of a physiological feature of a user, and a physiological feature of each person is unique. Therefore, the user mainly focuses on comfort of the wearable device. A headset is used as an example. Recent popularity of a wireless headset improves wearing convenience of the headset, and a frequency and duration of using the headset by a user also increase accordingly. For users, sizes of ear canals and cavities of auricular concha (which is equivalent to a physiological feature) are different. For some users, a headset of a unified model is extremely small and loose, and easily falls off when being worn. For other users, the headset of the unified model is extremely large, and causes distending pain when being worn for a long time. A conventional manner of equipping earbuds of different models for a headset cannot well meet a customization requirement, and has been gradually eliminated. Headset customization is a new direction of current headset manufacturing. Private customization may improve comfort of a user when wearing a headset. An ear mold of a target user is first made, an earphone housing is made based on the ear mold, and then a sound-making module is added to the earphone housing, to obtain a headset customized for the target user. However, the process is complex, the user may feel uncomfortable in the process of taking the ear mold, and disadvantages are a high price and a long customization period.

Therefore, embodiments of this application provide a deformable structure, a wearable device, and a wearable device usage method, so that the wearable device can be adaptively deformed, based on a personal physiological feature of a user, into a customized product that matches the user. This meets a wearing comfort requirement of the user on the wearable device.

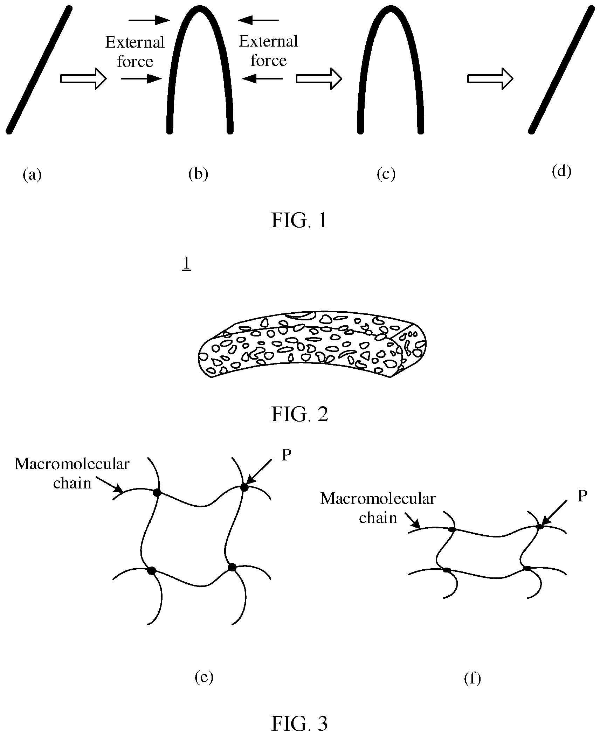

First, some terms in embodiments of this application are explained.
(1) A glass transition temperature is a temperature at which an amorphous polymer (including a non-crystalline part of a crystalline polymer) changes from a glass state to a high elastic state or from a high elastic state to a glass state, and is a lowest temperature for free motion of a macromolecule chain of the amorphous polymer. The glass transition temperature is usually represented by Tg (glass transition temperature), and varies with measurement methods and conditions. The polymer is elastic at a temperature higher than the glass transition temperature. The macromolecular polymer is brittle at a temperature lower than the glass transition temperature. It should be understood that, elasticity of the macromolecular polymer at a temperature higher than the glass transition temperature and brittleness of the macromolecular polymer at a temperature lower than the glass transition temperature are relative concepts, and are not intended to limit a specific state of the macromolecular polymer. In this application, under an external force, the polymer may change from a high elastic state at a temperature higher than the glass transition temperature to a glass state at a temperature lower than the glass transition temperature.
(2) A shape memory polymer is a polymer material that has the following feature: The material in a first shape (namely, an initial shape or a permanent shape) changes the initial shape of the material under a specific condition and is fixed into another shape, and can restore to the first shape under stimulation of an external condition (for example, heat, electricity, light, and chemical induction). A mechanism of the shape memory polymer is usually understood as that the shape memory polymer has a two-phase structure: a fixed phase that maintains a macro-initial shape and a reversible phase that can be reversible between a soft state and a hard state. When an external stimulation condition is met and there is no external force impact, a molecular chain in the reversible phase is curled under an action of entropy elasticity, and the polymer automatically restores to the first shape. When an excitation condition is met and there is an external force, the molecular chain in the reversible phase is stretched, and the polymer generates macro deformation, and is deformed into a second shape. After the excitation condition is removed, the molecular chain in the reversible phase is frozen, and the second shape is fixed. Refer to a deformation process of the shape memory polymer shown in FIG. 1. As shown in a in FIG. 1, the shape memory polymer is in the first shape (namely, an initial shape or a permanent shape formed through curing for one time) without stimulation. When the shape memory polymer is stimulated by the external condition (for example, heat, electricity, light, and chemical induction), as shown in b in FIG. 1, the shape memory polymer is soft and may be deformed into the second shape under an external force. When the external force is maintained and the stimulation condition is removed, as shown in c in FIG. 1, the second shape of the shape memory polymer is equivalent to being fixed. In this case, the shape is still maintained when the external force is removed. Then, the shape memory polymer is stimulated by the external condition (without an external force), as shown in d in FIG. 1, the shape memory polymer may become soft and restore to the first shape of the shape memory polymer.
(3) A light-curing functional group is a group that can be cross-linked under stimulation of light (mainly ultraviolet light).
(4) A porosity is a percentage of a volume of pores in a material to a total volume of the material.
(5) A Young's modulus is a physical quantity that describes a capability of a solid material to resist deformation. When an elastic material bears a normal stress, a normal strain is generated. The Young's modulus is defined as a ratio of the normal stress to the normal strain. A large Young's modulus indicates small deformation of the material obtained when the material is compressed or stretched.
(6) An elongation at break is a ratio of a stretched length to a length before stretching, obtained when a fiber is stretched to break under an external force, and is represented by a percentage.

To make objectives, technical solutions, and advantages of this application clearer, the following further describes in detail this application with reference to accompanying drawings.

The terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

Refer to a deformable structure 1 shown in FIG. 2. The deformable structure 1 may be manufactured, based on an application scenario, into a shape that adapts to a structure in which the deformable structure is used. The deformable structure 1 shown in FIG. 2 has an arc surface, and may be disposed on an arc surface of an object. For example, when the deformable structure 1 is used in an earphone, the deformable structure 1 may be disposed on a surface of a structure of an in-ear part of the earphone, and a shape of the deformable structure 1 is set to adapt to a shape of an outer surface of the earphone. When the in-ear part of the earphone is disposed in an ear of a user, the deformable structure 1 is directly in contact with the ear of the user. The deformable structure 1 includes a shape memory polymer and has a porous structure (for a feature of the shape memory polymer, refer to FIG. 1). The deformable structure 1 may be used in a wearable device based on the feature of the shape memory polymer and an advantage of the porous structure. A driving manner for the shape memory polymer to perform glass transition may be a temperature-driven manner, a light-driven manner, an electric-driven manner, a water-driven manner, an acid and alkali-driven manner, a magnetic-driven manner, and the like. For feasibility and technical maturity of a stimulation condition on the wearable device, a temperature-driven shape memory polymer is selected for the deformable structure 1. Specifically, a thermal excitation material may be selected, and a glass transition critical point of the shape memory polymer is a glass transition temperature.

Refer to FIG. 3. When monomers are polymerized to form the shape memory polymer in a first shape (namely, an initial shape or a permanent shape), it is equivalent to curing is performed for one time, and a state of the shape memory polymer is shown in e in FIG. 3. Macromolecular chains are cross-linked by using a point P, so that the shape memory polymer has a solid state, and the state is defined as a first state. The shape memory polymer has a fixed phase (a cross-linking point, for example, P in FIG. 3) and a reversible phase (a molecular chain between cross-linking points in FIG. 3). The fixed phase does not vary with the glass transition temperature Tg, the reversible phase can move at a temperature higher than Tg, and the material is in a high elastic state and is soft in a macroscopic manner. At a temperature lower than Tg, the molecular chain is frozen, and the material is in a glass state and is hard and brittle in a macroscopic manner. At a temperature higher than Tg, a molecular chain in the reversible phase of the shape memory polymer may be stretched under an external force, and the material is compressed and deformed in a macroscopic manner, to obtain a second shape (as shown in f in FIG. 3). When the external force is maintained, the temperature of the shape memory polymer decreases to be lower than the glass transition temperature Tg, and the molecular chain in the reversible phase is frozen. In this case, the external force is removed, and the second shape of the material is maintained. In this case, the shape memory polymer is hard and brittle, and the state is a glass state (which is equivalent to the fixed phase shown in e in FIG. 3). When the shape memory polymer is heated again to a temperature higher than the glass transition temperature Tg, and there is no external force, the molecular chain in the reversible phase of the shape memory polymer is curled under an action of entropy elasticity, and the material expands and restores to the first shape. In embodiments of this application, the glass transition temperature Tg of the shape memory polymer is set to 36°C to 50°C. It should be understood that, if the shape of the shape memory polymer is changed under an external force, a changed shape of the shape memory polymer is the second shape, and the second shape of the shape memory polymer is maintained through reversible phase freezing.

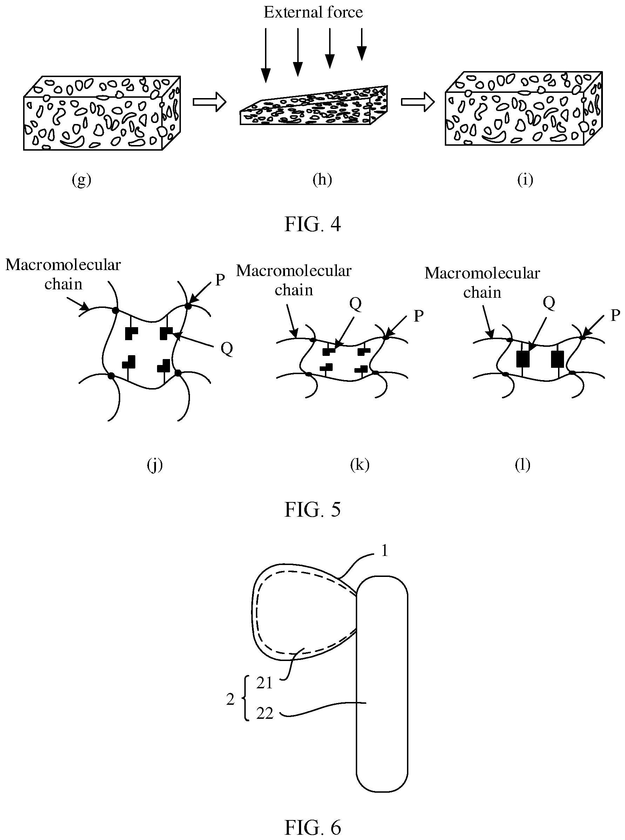

The porous structure may enable the deformable structure 1 to have a good porosity, and air filled in the porosity helps implement volume expansion and contraction of the deformable structure 1. As shown in g in FIG. 4, in the first state, the deformable structure 1 is in the first shape. When the deformable structure 1 is heated to a temperature higher than the glass transition temperature Tg (that is, a stimulation condition is met), the deformable structure 1 becomes soft and can be deformed under an external force. As shown in h in FIG. 4, the deformable structure 1 is compressed under an external force, so that the deformable structure 1 is deformed into the second shape. The external force is maintained, and heating is stopped. The temperature of the deformable structure 1 decreases to be lower than the glass transition temperature Tg, and then the external force is removed. In this case, the second shape of the deformable structure 1 is memorized, and it may be considered that the second shape is maintained. As shown in i in FIG. 4, when there is no external force, the deformable structure 1 is heated again to a temperature higher than the glass transition temperature Tg, and the deformable structure 1 restores from the second shape to the first shape, to implement a reversible deformation process.

According to the foregoing embodiment, because deformation of the shape memory polymer is reversible, in the first state, a phenomenon in which the second shape is slowly restored to the first shape at an ambient temperature also exists, especially when the ambient temperature is close to or slightly higher than a thermal excitation temperature, the phenomenon is more obvious (according to a time-temperature superposition principle). Consequently, deformation maintaining time is limited, and the maintaining time varies from several days to several months according to different formulas (a higher glass transition temperature Tg indicates a lower ambient temperature, and longer maintaining time of the second shape in an environment). Usually, when the shape memory polymer slowly restores from the shape shown in h in FIG. 4 to the first shape shown in i in FIG. 4 or g in FIG. 4, the user needs to repeat steps shown in FIG. 4 again to deform the deformable structure 1, so that the deformable structure 1 adapts to a personal physiological feature of the user. However, this is inconvenient and affects user experience.

To avoid the trouble that the user needs to irregularly re-deform the earphone, the deformable structure 1 provided in embodiments of this application may introduce a second-time curing mechanism into the shape memory polymer included in the deformable structure 1, so that the shape memory polymer may change from the first state to the second state. The second state herein is defined as follows: At a first temperature, a Young's modulus of the shape memory polymer in the second state is greater than a Young's modulus of the shape memory polymer in the first state. The shape memory polymer has glass transition temperatures in the first state and the second state, and the first temperature is higher than a glass transition temperature Tg of the shape memory polymer in the first state. Herein, the Young's modulus is used to measure a difficulty degree of deformation of the shape memory polymer. The difficulty degree of deformation of the shape memory polymer may alternatively be measured by using an elongation at break. This is not described herein again.

FIG. 5 is a schematic diagram of a curing principle of the shape memory polymer. In FIG. 5, j and k respectively correspond to the first shape and the second shape of the shape memory polymer. When the first shape of the shape memory polymer is formed through curing for one time, the macromolecular chains are cross-linked at the point indicated by P. In this case, the shape memory polymer is in the first state, and the functional group (a point indicated by Q) is in a free state. The free state herein means that a cross-linking reaction or another reaction that may increase the Young's modulus of the shape memory polymer is not performed on the functional group. The second shape of the shape memory polymer shown in k in FIG. 5 is affected by the ambient temperature, and has a trend of gradually rebounding to the first shape of the shape memory polymer. It is difficult to maintain the second shape for a long time, and usage is affected. To keep the second shape from being affected by the ambient temperature for a long time, a reaction (for example, a cross-linking reaction shown in 1 in FIG. 5) may be performed on the functional group under a proper stimulation condition, so that the second shape is maintained permanently, and the shape memory polymer is in the second state. Compared with the shape memory polymer in the first state, the shape memory polymer in the second state has a more stable shape that may no longer easily vary with environmental conditions. For ease of description, transition of the shape memory polymer from the first state to the second state may also be described as second-time curing.

In addition, because the second-time curing mechanism brought by the functional group can greatly avoid impact of the external environment on a shape change of the deformable structure 1, a low glass transition temperature may be set for the shape memory polymer. Therefore, when the deformable structure 1 is in contact with the user, the user does not feel uncomfortable due to an excessively high temperature of the deformable structure 1. This improves user experience.

When a method in which the functional group enables the shape memory polymer to change from the first state to the second state is a cross-linking reaction performed on the functional group under the stimulation condition, a cross-linking density of the shape memory polymer in the first state is less than a cross-linking density of the shape memory polymer in the second state. Compared with the shape memory polymer in the second state, the shape memory polymer in the first state is more likely to be deformed at a temperature higher than Tg when the Young's modulus is smaller.

A reaction mechanism of the functional group includes but is not limited to free radical polymerization, cationic polymerization, anionic polymerization, coordination polymerization, and various functional group reactions. In some embodiments, a body of the shape memory polymer includes but is not limited to an epoxy material, an acrylate material, and a polyurethane material, and the cross-linking reaction performed on the functional group may be excited by light.

For example, a shape memory polymer emulsion is obtained through emulsion polymerization performed on ethyl acrylate, butyl acrylate, and glycidyl methacrylate, and a small amount of polyetheramine D230 is added for the cross-linking reaction, to obtain the shape memory polymer (namely, the shape memory polymer in the first state) that is cured for one time. In this case, epoxy groups (which is equivalent to the functional group) in a system are excessive, a cationic initiator is added, and ring-opening polymerization (cationic polymerization) is performed on the excessive epoxy groups in the system, so that the shape memory polymer changes from the first state to the second state.

Alternatively, the shape memory polymer in the first state (namely, the shape memory polymer in the first state) is obtained through a reaction performed on sulfhydryl/amine+acrylate. In this case, acrylate double bonds in a system are excessive, and the cross-link reaction (free radical polymerization) is performed on acrylate double bonds under stimulation of light, so that the shape memory polymer changes from the first state to the second state.

Alternatively, the shape memory polymer (namely, the shape memory polymer in the first state) that is cured for one time is obtained through a reaction performed on glycidyl methacrylate, epoxy E44, and polyetheramine D230. In this case, acrylate double bonds in a system are excessive, and the cross-link reaction (free radical polymerization) is performed on acrylate double bonds under stimulation of light, so that the shape memory polymer changes from the first state to the second state.

Alternatively, the shape memory polymer (namely, the shape memory polymer in the first state) that is cured for one time is obtained through a reaction performed on ethyl acrylate, methyl methacrylate, 7-(1-acrylate ethoxy)-4-methylcoumarin, 1, 6-hexanediol diacrylate, and photoinitiator 819 under visible light. Then, "2+2" cycloaddition of coumarin is excited by ultraviolet light, so that the shape memory polymer changes from the first state to the second state.

An increase in the cross-linking density of the shape memory polymer usually leads to changes in material performance, for example, an increase in the Young's modulus and a decrease in the elongation at break. Because the deformable structure 1 in embodiments of this application includes the shape memory polymer, the deformable structure 1 may be used in a part that is of the wearable device and that is in contact with the user. When the user wears the wearable device, the deformable structure 1 in the first state may be deformed based on a personal physiological feature of the user, to adapt to the physiological feature of the user. This meets a comfort requirement of the user. When the second shape adapts to a physiological feature of a specific user and meets a comfort requirement of the user, the functional group may be stimulated, so that the shape memory polymer changes from the first state to the second state, and the second shape is maintained to be stable. This facilitates usage of the user for a long time.

It is considered that the glass transition temperature Tg of the shape memory polymer used to prepare the deformable structure 1 needs to be higher than the ambient temperature and a human body temperature (36°C to 50°C), and the shape memory polymer, as a wearable material, needs to be human body-friendly with small toxicity. A preparation formula of the shape memory polymer used to prepare the deformable structure 1 in embodiments of this application may be any one or more of polyacrylate (polyacrylate), polyurethane (polyurethane), epoxy (epoxy) resin, and polyester (polyester). Specifically, a formula of the polyacrylate material may include ethyl acrylate (ethyl acrylate), butyl acrylate (butyl acrylate), and methyl methacrylate (methyl methacrylate, MMA). A formula of the polyurethane material may include polytetrahydrofuran glycol (polytetrahydrofuran glycol, PTMG/PTMEG), hexamethylene diisocyanate (hexamethylene diisocyanate, HDI), and hydroxyethyl acrylate. A formula of the epoxy resin material may include epoxy E44 and polyetheramine D230. A formula of the polyester material may include dimethylolpropionic acid (dimethylolpropionic acid, DMPA), adipic acid (adipic acid), and pentanediol (pentanediol). A proper cross-linking agent, a proper initiator, and a proper diluent further need to be added during preparation based on a requirement of a preparation process. The diluent is used to adjust a porosity of the porous structure and appearance and a structure of the pore. Usually, a type of the diluent is selected as a hydrophilic diluent, including but not limited to water, polyvinyl alcohol (polyvinyl alcohol, vinylalcohol polymer, PVA), sodium polyacrylate (sodium polyacrylate), and polyethylene glycol (polyethylene glycol, PEG).

A process used for forming the porous structure of the deformable structure 1 may include a solvent ice-templating method, a direct template method, and a foaming method. Specifically, the solvent ice-templating method is to use a solvent crystal generated in situ in a freezing process as a template, and obtain a porous structure through solvent volatilization. The direct template method is to add a template agent incompatible with a polymer (which is equivalent to the shape memory polymer) precursor to the precursor for polymerization, and then wash the template agent from a polymer matrix through post-processing, to obtain a required porous structure. The foaming method is to prepare a porous structure by using a physical or chemical method to produce bubbles. Finally, a structure of the deformable structure 1 obtained through curing for one time is similar to fine foam. During deformation of the deformable structure 1, the porous structure facilitates expansion and compression of the deformable structure 1.

In embodiments of this application, when the shape memory polymer used to prepare the deformable structure 1 is in the first state, a thermal excitation temperature (deformation temperature) is determined by the glass transition temperature Tg of the shape memory polymer. The glass transition temperature Tg is a glass transition temperature of the shape memory polymer in the first state. When the shape memory polymer is a polymer with a single component (only one glass transition temperature Tg), the thermal excitation temperature (deformation temperature) of the shape memory polymer is Tg. When the shape memory polymer is a polymer with a plurality of components (two, three, or more components) (there are a plurality of glass transition temperatures Tg), the thermal excitation temperature (deformation temperature) of the shape memory polymer corresponds to a highest temperature Tg of the shape memory polymer. In some embodiments, the shape memory polymer used to prepare the deformable structure 1 in embodiments of this application includes a first component and a second component, and the first component and the second component have different glass transition temperatures. Specifically, the glass transition temperature of the first component is higher than the glass transition temperature of the second component. For example, the glass transition temperature of the first component is 40°C to 50°C, and the glass transition temperature of the second component is lower than -10°C. It should be understood that the thermal excitation temperature of the shape memory polymer is the same as the glass transition temperature Tg of the first component. The first component with a high glass transition temperature is in a glass state at a room temperature, is hard and brittle, and can provide a shape memory capability for the shape memory polymer. The second component with a low glass transition temperature is in a high elastic state at a room temperature, is soft and elastic, and can ensure specific softness and toughness of the shape memory polymer at the room temperature. The first component and the second component are compounded based on a specific mixing proportion, so that the deformable structure 1 can maintain target hardness and toughness at the room temperature. This meets a wearing comfort requirement. A range of a mass ratio of the first component to the second component may be selected as 5:1 to 1:2 based on experimental data.

The following describes, by using an example in which the porous structure is prepared by using the solvent ice-templating method, preparation of the shape memory polymer used to prepare the deformable structure 1 in this application. The polymer emulsion used to prepare the shape memory polymer is obtained by mixing a first emulsion including the first component and a second emulsion including the second component. A ratio of each component in the first emulsion and a ratio of each component in the second emulsion may be adjusted, and a specific emulsifier and an initiator are added for mixing, to obtain the first emulsion and the second emulsion. The first emulsion and the second emulsion are mixed based on a specific proportion (5:1 to 1:2), an amine cross-linking agent (for example, triethylenetetramine, isofluorone cyclohexamine, and polyetheramine) is added, and an emulsion is frozen for 2 hours to 10 hours at a low temperature of -30°C to -10°C. The emulsion is slowly frozen isotropically, and freezing demulsification occurs, so that epoxy in a macromolecular chain is in contact with amino in a water phase and epoxy-amino cross-linking occurs. Then, after several hours of freezing and drying, a mild cross-linking porous structure is obtained. After 3 hours of oven post-processing, epoxy and amino react completely, to obtain the shape memory polymer with a porous structure. A pore structure of the prepared shape memory polymer is not obvious and a surface is dense. Under a scanning electron microscope, pores are regularly and evenly distributed. A pore size ranges from several microns to dozens of microns, and a porosity is 30% to 90%. The pore size may range from 5 µm to 200 µm, and a smaller pore size can make a surface of the shape memory polymer more beautiful. In some embodiments, the pore size may be 40 µm to 70 µm, and appearance of pores is dense, even, and beautiful. A higher porosity can make the shape memory polymer has better expansion when the shape memory polymer restores to the first shape. It should be understood that polymerization of the first component and the second component is implemented in the foregoing preparation process.

A one-way shape memory polymer or a two-way shape memory polymer may be selected as the shape memory polymer in embodiments of this application. In this application, the first shape of the shape memory polymer is an expanded state of a porous material, and the shape memory polymer needs to be first adjusted to the second shape in a compressed state before the shape memory polymer performs expansion adaptive deformation in target space. For the one-way shape memory polymer, the deformable structure 1 is adjusted to the compressed state, and compression needs to be completed manually or by using a mold when the temperature of the deformable structure 1 is higher than the glass transition temperature Tg. Then, heating is stopped to maintain the compressed shape (namely, the second shape). For the two-way shape memory polymer, the two-way shape memory polymer has a high-temperature expanded state (for example, 40°C to 50°C) and a low-temperature compressed state (for example, -20°C to -10°C). Therefore, the deformable structure 1 may automatically return to the compressed state by cooling the deformable structure 1 (for example, placing the deformable structure 1 in a refrigerator freezer).

The deformable structure 1 may be used in a wearable device, and the wearable device may specifically be a headset or glasses. When the wearable device is an earphone, especially an in-ear earphone or a half-in-ear earbud, an earphone housing of the earphone needs to be adapted to and in contact with an ear of a user. Therefore, the deformable structure 1 may be at least disposed on a surface, in contact with the ear of the user, of the earphone housing. When the wearable device is glasses, especially augmented reality (augmented reality, AR) glasses, legs of the glasses need to be adapted to and in contact with ear roots of the user, and nose pads of the glasses need to be adapted to and in contact with a nose bridge of the user. Therefore, the deformable structure 1 may be disposed at least on a surface of the leg of the glasses and a surface of the nose pad of the glasses.

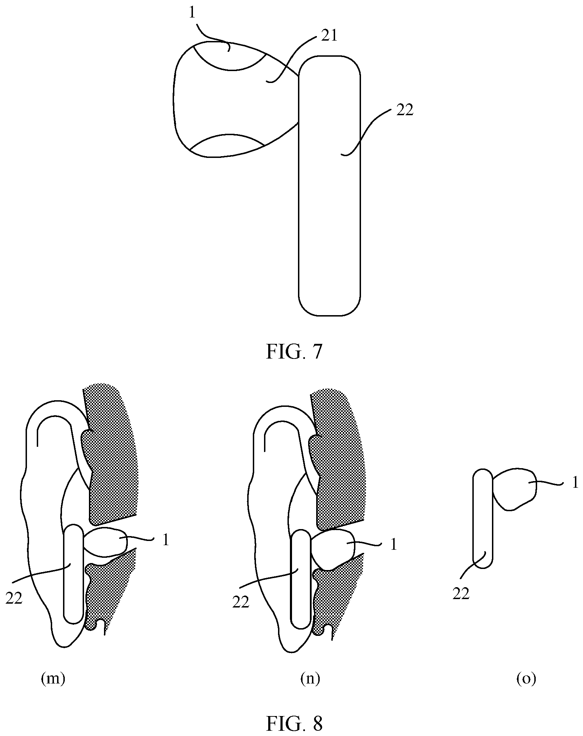

Refer to a wearable device shown in FIG. 6 or FIG. 7. An earphone is used as an example of the wearable device. The wearable device includes a device body 2 and the deformable structure 1 attached to the device body 2. The deformable structure 1 may specifically be located on a surface, in contact with a physiological feature of a user, of the device body 2. When the wearable device is an earphone, the device body 2 is equivalent to including an earphone housing 21 and an earphone handle 22. When the earphone is being used, the earphone housing 21 needs to extend into the ear of the user. The deformable structure 1 may specifically be disposed on the earphone housing 21, and another structure, for example, a sound-making module, may be disposed in the earphone housing 21. The earphone housing 21 may provide basic bearing and support for the deformable structure 1, and may further provide bearing and support for another functional component. The deformable structure 1 may be disposed on a surface of the earphone housing 21 in a full coverage (as shown in FIG. 6) or partial coverage (as shown in FIG. 7) manner.

When the deformable structure 1 is disposed on the surface of the earphone housing 21 in the partial coverage manner, a point covered by the deformable structure 1 may depends on a value of pressure applied to each part of the earphone housing 21 when being worn. Specifically, a position covered by the deformable structure 1 may be a target force-bearing point of the earphone housing 21. The target force-bearing point is a position at which the user easily feels pressing pain due to stress concentration when the earphone housing 21 is worn in the ear of the user and used.

Specifically, an example in which the wearable device is the earphone shown in FIG. 6 is used. The deformable structure 1 is disposed on the surface of the earphone housing 21 in the full coverage manner. When the user wears the earphone, the earphone housing 21 and the deformable structure 1 are plugged into the ear of the user. When the earphone is manufactured, the deformable structure 1 is heated to a temperature higher than the glass transition temperature Tg of the shape memory polymer in the first state. After the deformable structure 1 becomes soft, the deformable structure 1 is compressed to the second shape under an external force (a state of the deformable structure 1 is equivalent to the second shape shown in h in FIG. 4, and the deformable structure 1 is set to the second shape in the compressed state when the earphone is delivered from a factory), and the second shape is maintained, so that the earphone housing 21 and the deformable structure 1 have small volumes. When the user receives the earphone, the deformable structure 1 is in the compressed state and in the second shape as shown in m in FIG. 8. The small volumes of the earphone housing 21 and the deformable structure 1 are conducive to being plugged into the ear of the user. In this case, the user feels slightly loose when wearing the earphone. This avoids pressing pain, and reserves specific space for adaptive expansion and deformation. As shown in n in FIG. 8, the deformable structure 1 is heated, so that the temperature of the deformable structure 1 is higher than the glass transition temperature Tg. The deformable structure 1 becomes soft, and starts to expand and restore to an initial state. Due to a limited shape of the ear of the user, the deformable structure 1 is correspondingly deformed. During expansion of the deformable structure 1, the deformable structure 1 touches a structure of the ear of the user, and the structure of the ear applies specific pressure to the deformable structure 1, so that the deformable structure 1 is deformed under the pressure to match the shape of the ear of the user. Heating of the deformable structure 1 is stopped, and after the deformable structure 1 in the ear of the user cools for a period of time, the second shape of the deformable structure 1 is fixed (as shown in n in FIG. 8). In this case, the earphone may be taken out from the ear of the user, and the second shape of the deformable structure 1 that adapts to the shape of the ear is memorized, which is equivalent to that the second shape is still maintained, as shown in o in FIG. 8. In this case, for the user, the earphone is customized for the user, complies with a personal physiological feature of the user, and has higher comfort when being worn.

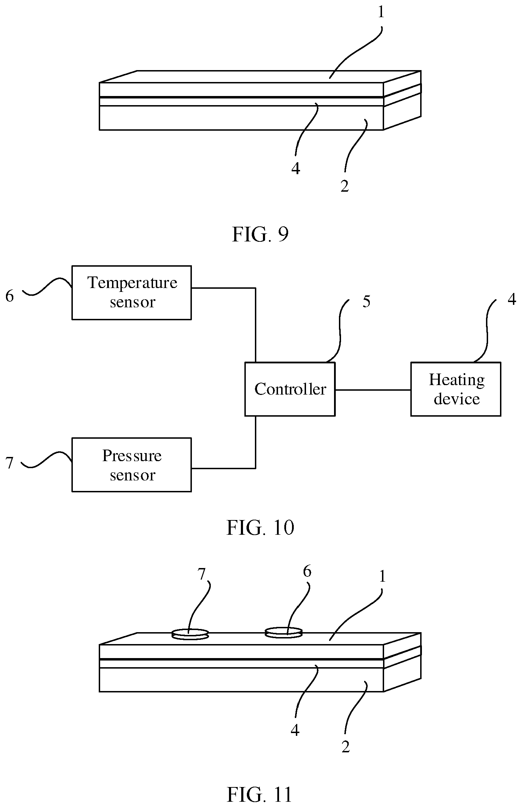

When the wearable device in embodiments of this application is used, the deformable structure 1 needs to be heated. Because the glass transition temperature Tg of the shape memory polymer, included in the deformable structure, 1 in the first state is set to 36°C to 50°C, in some scenarios, the deformable structure 1 may be heated by using a body temperature of the user, and an implementation of the deformable structure 1 is simple and easy. In some scenarios with high requirements, the deformable structure 1 needs to be heated by using an external device. As shown in FIG. 9, the wearable device further includes a heating device 4 configured to heat the deformable structure 1. The heating device 4 may specifically be a resistance wire, an electric heating plate, or another structure. When the heating device 4 is powered on, joule heat is generated to raise the temperature of the deformable structure 1 to heat the deformable structure 1. Based on descriptions of the foregoing embodiments, the surface that is of the deformable structure 1 and that is away from the device body 2 needs to be in contact with the user body, and the deformable structure 1 needs to be deformed in a direction away from the device body 2 during deformation. Therefore, the heating device 4 may be disposed on a side that is of the deformable structure 1 and that faces the device body 2 in a close contact manner. Deformation of the deformable structure 1 is not interfered, and the heating device 4 is not in contact with the user body. It is better that the heating device 4 can be attached to a surface of the side that is of the deformable structure 1 and that faces the device body 2 in a full coverage manner, to ensure that the deformable structure 1 is evenly heated.

Refer to FIG. 10. The wearable device may further include a controller 5. The controller 5 is in signal connection with the heating device 4, and may control the heating device 4 to start heating and stop heating. After the controller 5 controls the heating device 4 to stop heating, the wearable device continues to fit the physiological feature of the user, and maintains pressure between the physiological feature of the user and the wearable device (for example, maintains pressure between the structure of the ear and the deformable structure 1). After the deformable structure 1 cools down to a body temperature of the user or an ambient temperature, the wearable device is removed, and a shape of the deformable structure 1 maintains in a shape matching the physiological feature of the user. Usually, heating duration of the heating device 4 for heating the deformable structure 1 may be set to be in 2 minutes, and a timer may be set in the controller 5 to monitor the heating duration of the heating device 4 for heating the deformable structure 1.

To control the heating device 4, the wearable device in embodiments of this application may further include a temperature sensor 6, and the controller 5 is in signal connection with the temperature sensor 6. The temperature sensor 6 may monitor the temperature of the deformable structure 1. The temperature sensor 6 is set to have a temperature threshold (the threshold meets the thermal excitation temperature and is safe for the human body). When the temperature of the deformable structure 1 reaches the temperature threshold, the temperature sensor 6 feeds back information to the controller 5, and the controller 5 controls, based on a temperature fed back by the temperature sensor 6, the heating device 4 to stop heating. As shown in FIG. 11, the temperature sensor 6 may specifically be disposed on the surface that is of the deformable structure 1 and that is away from the device body 2. The temperature sensor 6 may alternatively be disposed inside the deformable structure 1 (not shown herein). To ensure accuracy of temperature monitoring, the temperature sensor 6 needs to be isolated from the heating device 4, to prevent the heating device 4 from affecting temperature monitoring of the temperature sensor 6 on the deformable structure 1.

In some embodiments, the wearable device in embodiments of this application further includes a pressure sensor 7 in signal connection with the controller 5. The pressure sensor 7 is disposed on the deformable structure 1, and may specifically be located on the surface (as shown in FIG. 11) that is of the deformable structure 1 and that is away from the device body 2 or on the surface (not shown herein) that faces the device body 2. The earphone is used as an example. The deformable structure 1 generates pressure inside the ear of the user during deformation, and pressure inside the ear is also applied to the deformable structure 1 under a reverse force. The pressure sensor 7 is configured to monitor pressure applied to the deformable structure 1, and a pressure threshold is set for the pressure sensor 7. The pressure sensor 7 detects that the pressure applied to the deformable structure 1 reaches the pressure threshold, and the pressure sensor 7 feeds back information to the controller. The controller 5 may also control, based on the information fed back by the pressure sensor 7, the heating device 4 to stop heating.

It should be understood that the temperature threshold may be set to a high temperature that meets a heat excitation temperature and is safe and comfortable for a human body. The pressure threshold may be set to pressure that the user feels comfortable during wearing. The pressure threshold may be determined after data obtained based on wearing experience feedback of the user within a selected range is processed, and the pressure threshold may be set to a high, medium, or low level based on a requirement.

According to the foregoing records, the controller 5 may control the heating device 4 based on the duration, and monitoring information fed back by the temperature sensor 6 and the pressure sensor 7. Specifically, when the timer, the temperature sensor 6, and the pressure sensor 7 are all disposed in the wearable device, the controller 5 may control the heating device 4 to stop heating provided that any one of the monitoring devices feeds back monitoring information to the controller 5. When only the timer or the temperature sensor 6 is disposed in the wearable device, the controller 5 may control, based on only monitoring information fed back by the timer or the temperature sensor 6, the heating device 4 to stop heating. When the pressure sensor 7 is disposed in the wearable device, the timer or the temperature sensor 6 further needs to be disposed (to prevent a temperature from being excessively high). When either the pressure sensor 7 or the timer feeds back the monitoring information to the controller 5, or when either the pressure sensor 7 or the temperature sensor 6 feeds back the monitoring information to the controller 5, the controller 5 may control the heating device 4 to stop heating.

The controller 5 may specifically be a circuit board, a single-chip microcomputer, or another controller, or may be a main control center of another commonly used electronic device. For example, a main board of a mobile phone of the user serves as the controller 5, and corresponding software is configured in the mobile phone to control the heating device 4.

In some embodiments, a protective layer is disposed on the surface of the deformable structure 1. The surface of the deformable structure 1 is a side away from the device body, namely, a side in contact with skin of the user. The protective layer needs to be elastic, and does not affect expansion and deformation of a deformable material. In addition, the protective layer may further be set to have features such as waterproof, heat insulation, antibacterial, and dirty resistance, for example, the protective layer may be silicone or fluorine rubber.

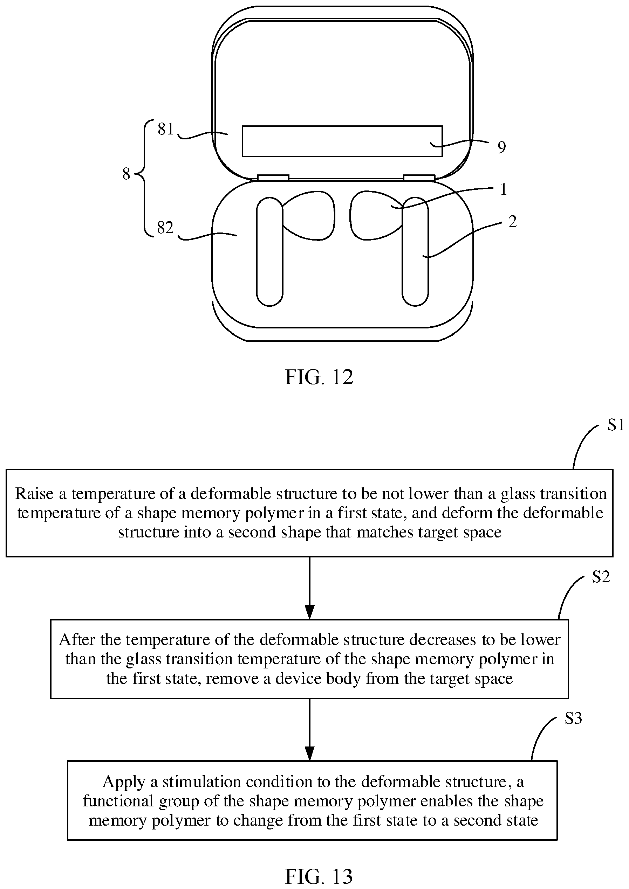

The wearable device in embodiments of this application may further include a case 8 (for example, the earphone includes an earphone case), and the case 8 includes accommodation space for accommodating the device body 2. When the device body 2 is specifically an earphone, FIG. 12 shows the case 8 including a first housing 81 and a second housing 82. The first housing 81 and the second housing 82 may be fastened to form accommodating space between the first housing 81 and the second housing 82, and the device body 2 may be placed in the accommodating space.

When the user requires second-time curing (the shape memory polymer changes from the first state to the second state) of the deformable structure 1, a stimulation condition generation device configured to stimulate the functional group of the shape memory polymer of the deformable structure 1 may be disposed in the case 8. For example, the functional group is a light-curing functional group. Ultraviolet light 9 (which is equivalent to a stimulation condition generation device) configured to irradiate the deformable structure 1 to perform light curing on the deformable structure 1 for a second time may be designed in the case 8 (in FIG. 12, the ultraviolet light 9 is specifically located on an inner wall of the first housing 81, and a position of the ultraviolet light 9 may correspond to a position of the earphone housing 21). When the user repeatedly deforms, adjusts, and wears the wearable device for a period of time, and determines an optimal shape obtained through adaptive deformation, the wearable device that generates the second shape through adaptive deformation may be placed in the case 8, and the ultraviolet light 9 is enabled for illumination. After the second-time light curing is completed, the deformable structure 1 obtains a permanent fixed shape.

In some embodiments, the heating device 4 configured to heat the deformable structure 1 may further be disposed in the case 8. During usage, the device body 2 may be placed in the case 8, and the heating device 4 is configured to heat the deformable structure 1, so that the temperature of the deformable structure 1 reaches the glass transition temperature Tg. Then, the device body 2 is taken out, adjusted to a compressed state, and placed at the physiological feature of the user. In this case, although the deformable structure 1 is separated from a heat source of the earphone case, the residual temperature is still higher than Tg, and the deformable structure 1 in the compressed state expands and is deformed. Limited by the physiological feature of the user, the deformable structure 1 generates a shape that matches the physiological feature of the user. In this case, when the heating duration reaches the duration threshold or the temperature of the deformable structure 1 reaches the temperature threshold, heating may be stopped.

Then, a wearable device usage method provided in embodiments of this application is described. The wearable device usage method is used to use the wearable device. As shown in FIG. 13, the method specifically includes the following step.

S3: Apply a stimulation condition to a deformable structure of the wearable device, to enable a shape memory polymer to change from a first state to a second state.

At a first temperature, a Young's modulus of the shape memory polymer in the second state is greater than a Young's modulus of the shape memory polymer in the first state, and the first temperature is higher than a glass transition temperature of the shape memory polymer in the first state.

When the shape memory polymer changes from the first state to the second state, the second shape of the deformable structure may be cured, to facilitate long-term usage of a specific user. For example, a functional group is a light-curing group. After the user repeatedly deforms, adjusts, and wears the wearable device for a period of time, an optimal shape obtained through adaptive deformation is determined, and the ultraviolet light 9 may be configured to irradiate the deformable structure 1. A cross-linking reaction is performed on the light-curing group of the shape memory polymer to implement light curing, so that a cross-linking density of the shape memory polymer in the second state is greater than a cross-linking density of the shape memory polymer in the first state. Therefore, the deformable structure 1 may obtain a more stable shape, and does not easily be deformed due to changing of an environment condition. This is convenient for the user to use the deformable structure for a long time. Certainly, an increase of the Young's modulus is only a property change of an increase of the cross-linking density of the shape memory polymer. That the cross-linking density of the shape memory polymer in the second state is greater than the cross-linking density of the shape memory polymer in the first state may also be reflected in another aspect. Details are not described herein again.

Still refer to FIG. 13. Before the shape memory polymer changes from the first state to the second state, the shape memory polymer included in the deformable structure 1 is still in the first state. In this case, the shape memory polymer enables the deformable structure 1 to be deformed based on a personal physiological feature of the user, to adapt to the personal physiological feature of the user (the second shape). This meets a comfort requirement of the user. Therefore, the wearable device usage method further includes the following steps.

S1: Raise a temperature of the deformable structure 1 to be not lower than the glass transition temperature Tg of the shape memory polymer in the first state, and deform the deformable structure 1 into a second shape that matches target space.

S2: After the temperature of the deformable structure 1 decreases to be lower than the glass transition temperature of the shape memory polymer in the first state, remove a device body from the target space.

Step S1 may specifically be implemented in two manners:

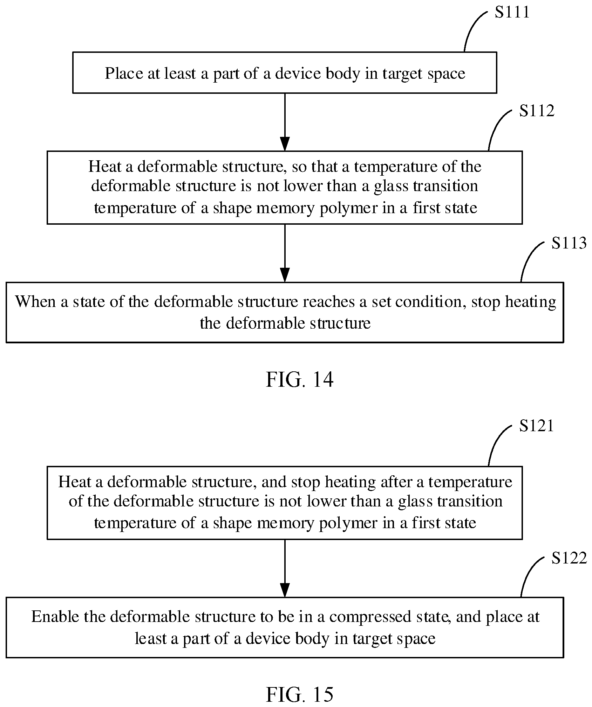

For a manner 1, refer to FIG. 14. Step S1 includes the following steps.

S111: Place at least a part of the device body 2 in the target space (for example, placing the earphone housing 21 in the ear of the user, as shown in i in FIG. 6), where the deformable structure 1 is attached to at least a part of the device body 2 (as shown in FIG. 4 and FIG. 5), and the device body 2 to which the deformable structure 1 is attached has a small size, and may be conveniently placed in the target space. It should be understood that the target space is not limited to concave space, and the target space may be defined as space or a location that can be in contact with a physiological feature of the user.

S112: Heat the deformable structure 1, so that the temperature of the deformable structure 1 is not lower than the glass transition temperature Tg of the shape memory polymer in the first state, where the heating device 4 may be configured to the heat the deformable structure 1, and the controller 5 may control enabling and disabling of the heating device 4. When the heating device 4 may change power or another parameter, the controller 5 is also configured to adjust a heating parameter of the heating device 4. When the temperature of the deformable structure 1 reaches the glass transition temperature Tg of the shape memory polymer in the first state, the deformable structure 1 becomes soft and starts to expand. Limited by the physiological feature shape of the user, the deformable structure 1 expands to a shape matching the physiological feature of the user (refer to j in FIG. 6).

S113: When a state of the deformable structure 1 reaches a set condition, stop heating the deformable structure 1, where that the state of the deformable structure 1 reaches the set condition may specifically include three cases. Case 1: Heating duration of the heating device 4 reaches a duration threshold, where the duration threshold may be 2 minutes, and the controller 5 controls the heating device 4 to stop heating. Case 2: The temperature of the deformable structure 1 reaches a temperature threshold, where the temperature threshold is a high temperature that meets a heat excitation temperature and is safe and comfortable for a human body. The temperature sensor 6 may be configured to monitor the temperature of the deformable structure 1, and feed back information to the controller 5. When the temperature of the deformable structure 1 reaches the temperature threshold, the temperature sensor 6 feeds back the information to the controller 5, and the controller 5 controls the heating device 4 to stop heating. Case 3: Pressure applied to the user by the deformable structure 1 during expansion reaches a pressure threshold, where the pressure threshold may be set to pressure that the user feels comfortable during wearing. The pressure sensor 7 may be configured to monitor the pressure applied to the user by the deformable structure 1, and feed back information to the controller 5. When the pressure applied to the user by the deformable structure 1 reaches the pressure threshold, the pressure sensor 7 feeds back the information to the controller 5, and the controller 5 controls the heating device 4 to stop heating.

Specifically, when the timer, the temperature sensor 6, and the pressure sensor 7 are all disposed in the wearable device, the controller 5 may control the heating device 4 to stop heating provided that any one of the monitoring devices feeds back monitoring information to the controller 5. When only the timer or the temperature sensor 6 is disposed in the wearable device, the controller 5 may control, based on only monitoring information fed back by the timer or the temperature sensor 6, the heating device 4 to stop heating. When the pressure sensor 7 is disposed in the wearable device, the timer or the temperature sensor 6 further needs to be disposed (to prevent a temperature from being excessively high). When either the pressure sensor 7 or the timer feeds back the monitoring information to the controller 5, or when either the pressure sensor 7 or the temperature sensor 6 feeds back the monitoring information to the controller 5, the controller 5 may control the heating device 4 to stop heating.

For a manner 2, refer to FIG. 15. Step S1 includes the following steps.

S121: Heat the deformable structure 1, and stop heating after the temperature of the deformable structure 1 is not lower than the glass transition temperature Tg of the shape memory polymer in the first state, where the heating device 4 configured to heat the deformable structure 1 may be disposed in a structure, for example, the case 8, the device body is placed in the case 8 shown in FIG. 12, and the heating device 4 heats the deformable structure 1, so that the temperature of the deformable structure 1 increases to be not lower than the glass transition temperature Tg of the shape memory polymer. Heating may be stopped by disabling the heating device 4, or the device body may be directly taken out from the case 8 without disabling the heating device 4, to stop heating. In this case, when the heating duration reaches the duration threshold or the temperature of the deformable structure 1 reaches the temperature threshold, heating may be stopped.

S122: Enable the deformable structure 1 to be in a compressed state, and place at least a part of the device body in the target space. Specifically, after step S121, the temperature of the deformable structure 1 is not lower than the glass transition temperature Tg of the shape memory polymer in the first state, at least a part of the device body needs to be placed in the target space immediately. The deformable structure 1 needs to maintain a compressed state, to easily place at least a part of the device body in the target space. After the deformable structure 1 is taken out of the case 8, and before at least a part of the device body is placed in the target space, the deformable structure 1 is deformed into the compressed state through compression by using an external force. Alternatively, a limiting cover that can keep the shape of the deformable structure 1 unchanged may be disposed on the surface of the deformable structure 1. After the deformable structure 1 is placed in the target space, the limiting cover may be pulled out or removed in another manner, and the deformable structure 1 may start to expand at a residual temperature. Limited by a shape of a physiological feature of the user, the deformable structure 1 expands to a shape that matches the physiological feature of the user.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A deformable structure, wherein the deformable structure comprises a shape memory polymer; and
the shape memory polymer comprises a functional group, wherein the functional group is used to enable the shape memory polymer to change from a first state to a second state under a stimulation condition, at a first temperature, a Young's modulus of the shape memory polymer in the second state is greater than a Young's modulus of the shape memory polymer in the first state, and the first temperature is higher than a glass transition temperature of the shape memory polymer in the first state.

2. The deformable structure according to claim 1, wherein the shape memory polymer comprises a first component and a second component, and a glass transition temperature of the first component is higher than a glass transition temperature of the second component.

3. The deformable structure according to claim 1 or 2, wherein the shape memory polymer is of a porous structure.

4. The deformable structure according to claim 3, wherein a pore size of the porous structure is 5 µm to 200 µm.

5. The deformable structure according to claim 3 or 4, wherein a porosity of the porous structure is 30% to 90%.

6. The deformable structure according to any one of claims 1 to 5, wherein in the first state, when a temperature of the shape memory polymer is lower than the glass transition temperature, the shape memory polymer is in a first shape; and
when the temperature of the shape memory polymer is higher than the glass transition temperature, the shape memory polymer forms a second shape under an external force, and the second shape is different from the first shape.

7. The deformable structure according to any one of claims 1 to 6, wherein a cross-linking density of the functional group obtained when the shape memory polymer is in the first state is less than a cross-linking density of the functional group obtained when the shape memory polymer is in the second state.

8. The deformable structure according to claim 7, wherein the functional group is a light-curing functional group.

9. The deformable structure according to any one of claims 1 to 8, wherein the shape memory polymer comprises any one or more of polyacrylate, polyurethane, epoxy resin, and polyester.

10. The deformable structure according to any one of claims 1 to 9, wherein the shape memory polymer is a one-way shape memory polymer or a two-way shape memory polymer.

11. The deformable structure according to any one of claims 1 to 10, wherein the glass transition temperature of the shape memory polymer is 36°C to 50°C.

12. A wearable device, comprising a device body and the deformable structure according to any one of claims 1 to 11, wherein the deformable structure is attached to a surface of the device body.

13. The wearable device according to claim 12, wherein the deformable structure is disposed at a target force-bearing point of the device body, and a value of pressure applied to the target force-bearing point when the wearable device is worn is greater than a pressure threshold.

14. The wearable device according to claim 12 or 13, further comprising a heating device and a controller, wherein the controller is in signal connection with the heating device, and the heating device is configured to heat the deformable structure.

15. The wearable device according to claim 14, further comprising a temperature sensor in signal connection with the controller, wherein the temperature sensor is in contact with the deformable structure and is isolated from the heating device.

16. The wearable device according to claim 15, further comprising a pressure sensor in signal connection with the controller, wherein the pressure sensor is disposed on a side that is of the deformable structure and that faces the device body or a side that is of the deformable structure and that is away from the device body.

17. The wearable device according to any one of claims 12 to 16, wherein a protective layer covers a surface of the deformable structure.

18. The wearable device according to any one of claims 12 to 17, further comprising a case, wherein the case comprises accommodation space for accommodating the device body.

19. The wearable device according to claim 18, wherein a stimulation condition generation device is disposed in the case, and the stimulation condition generation device is configured to provide a stimulation condition, to enable a shape memory polymer to change from a first state to a second state.

20. A wearable device usage method, used to use the wearable device according to any one of claims 12 to 19, wherein the method comprises:
applying a stimulation condition to a deformable structure to enable a shape memory polymer to change from a first state to a second state, wherein
at a first temperature, a Young's modulus of the shape memory polymer in the second state is greater than a Young's modulus of the shape memory polymer in the first state, and the first temperature is higher than a glass transition temperature of the shape memory polymer in the first state.

21. The usage method according to claim 20, wherein before the shape memory polymer changes from the first state to the second state, the method further comprises:
raising a temperature of the deformable structure to be not lower than the glass transition temperature of the shape memory polymer in the first state, and deforming the deformable structure into a second shape that matches target space; and
after the temperature of the deformable structure decreases to be lower than the glass transition temperature of the shape memory polymer in the first state, removing a device body from the target space.

22. The usage method according to claim 21, wherein the raising a temperature of the deformable structure to be not lower than the glass transition temperature of the shape memory polymer in the first state, and deforming the deformable structure into a second shape that matches target space comprises the following steps:
placing at least a part of the device body in the target space;
heating the deformable structure, so that the temperature of the deformable structure is not lower than the glass transition temperature of the shape memory polymer in the first state; and
when a state of the deformable structure reaches a set condition, stopping heating the deformable structure.

23. The usage method according to claim 22, wherein that a state of the deformable structure reaches a set condition comprises:
heating duration of the deformable structure reaches a duration threshold;
the temperature of the deformable structure reaches a temperature threshold; or
pressure applied to the deformable structure reaches a pressure threshold.

24. The usage method according to claim 21, wherein the raising a temperature of the deformable structure to be not lower than the glass transition temperature of the shape memory polymer in the first state, and deforming the deformable structure into a second shape that matches target space comprises the following steps:
heating the deformable structure, and when the temperature of the deformable structure is not lower than the glass transition temperature of the shape memory polymer in the first state, stopping heating; and
enabling the deformable structure to be in a compressed state, and placing at least a part of the device body in the target space.
